# EUROPEAN PATENT APPLICATION

(11) **EP 4 360 467 A1**
(43) Date of publication of application: **01.05.2024**
(21) Application number: 22204484.4
(22) Date of filing: 28.10.2022
(51) Int. Cl.: A23L 2/38, A23L 29/00, A23L 33/105, A23L 33/00, C12J 1/00, C12J 1/08

(54) **COMPOSITIONS COMPRISING ACETIC ACID, BUTYRIC ACID AND QUERCETIN AND USES THEREOF**

(30) Priority: 26.10.2022 PT 2022118285
(71) Applicant: Comtemp - Companhia Dos Temperos, Lda., 2330-210 Entroncamento (PT)
(72) Inventor: CALDAS PEREIRA CALDAS, Fernando António, SANTARÉM (PT)
(74) Representative: Pereira da Cruz, Joao

(57) **Abstract**

The present disclosure is directed to compositions comprising between 50% and 95% weight per weight (w/w) of acetic acid, between 0.1% and 5% (w/w) of butyric acid or a derivative thereof, and between 0.1% and 5% (w/w) of quercetin or a derivative thereof. Further, methods of use such as for the treatment and prevention of a medical condition associated with cancer, inflammatory diseases or disorders, metabolic disorders, obesity, diabetes, high blood pressure, vascular diseases, viral infection, and any combination thereof, in a subject in need thereof are also provided.

## Description

### FIELD OF THE INVENTION

The present disclosure relates generally to the field of compositions comprising acetic acid, butyric acid or derivatives thereof and quercetin or derivatives thereof and is directed to nutraceutical and food products comprising the same.

### BACKGROUND OF THE INVENTION

Vinegar is a term used to denote a sour and/or bittersweet liquid with acetic acid as the main component that has been widely used in domestic cooking. The preparation of vinegar is one of the oldest food production methods and involves the oxidative fermentation of ethanol, primarily obtained from plant material, by acetic acid bacteria (*Acetobacter Aceae*)*.* The composition of vinegar can be quite complex and varies depending on the starting material, some examples including vinegar from alcohol (e.g., brandy vinegar, spirit vinegar,), wine vinegar (made from wine, excess wine or waste wine), vinegar made from floury substances (e.g. malt vinegar, beer vinegar, cane vinegar, potato vinegar, rice vinegar) and fruit vinegar (made from fruit juice, e.g. apple vinegar, cherry vinegar, banana vinegar, pomegranate vinegar). Major vinegar components, besides acetic acid, include other organic acids (mainly gluconic, malic, tartaric, succinic acids) and sugars (mainly glucose and fructose). Classes of minor components include volatile compounds and antioxidant molecules, mainly polyphenols. Such minor components are important to the flavor and aroma of the vinegar.

Vinegar has historically been recognized as having a number of health benefits. Vinegar has long been used for medicinal purposes such as circulation, immune function, and fatigue recovery, and is effective in preventing arteriosclerosis and adult diseases such as hypertension, reducing cholesterol, reducing body fat and restoring fatigue. In addition to stimulating the digestive system, it helps digestion and strengthens the appetite. It is also added to various kinds of dishes to eliminate the refreshing sensation and odor, and it has been widely used as a function of natural antimicrobial agent.

Patent US9795682B2 discloses a composite vinegar infused juice blend for alleviating symptoms of the flu and/or the common cold comprising effective amounts of lemon juice, water, honey, peppermint extract; and a vinegar blend.

Patent JP4907215B2 discloses a vinegar-containing fruit juice beverage that suppresses an irritating odor and off-flavor derived from vinegar, retains the original flavor of fruit juice, and adds the health function of vinegar, and a method for producing the same.

As such, considering the foregoing, it may be appreciated that there is a need for novel and improved compositions comprising available ingredients such as vinegar and with improved nutritional value and improved biological activity.

### SUMMARY OF THE INVENTION

In one aspect of the present disclosure, there is provided a composition comprising between 50% and 95% weight per weight (w/w) of acetic acid, between 0.1% and 5% (w/w) of butyric acid or a derivative thereof, and between 0.1% and 5% (w/w) of quercetin or a derivative thereof.

In a further embodiment, the composition further comprises between 5% and 40% (w/w) of a fruit or vegetable material, wherein the material is selected from the group: an extract, a biomass, a filtrate, a concentrate, a wort, any fraction thereof, and any combination thereof

In a further embodiment, the acetic acid is vinegar, vinegar extract, vinegar mother, a derivative of vinegar, vinegar extract, vinegar mother, or any combination thereof.

In a further embodiment, the butyric acid or a derivative thereof is tributyrin.

In a further embodiment, a w/w ratio of the butyric acid or a derivative thereof and the quercetin or a derivative thereof is between 1.5:1 and 1:2.

In another aspect of the disclosure, there is provided an edible composition comprising the composition according to the present disclosure.

In another aspect of the disclosure, there is provided a food product comprising the composition according to the present disclosure.

In another aspect of the disclosure, there is provided a pharmaceutical composition comprising the composition according to the present disclosure, and optionally a pharmaceutically acceptable carrier.

In a further embodiment, the pharmaceutical composition is for use in the prevention or treatment of a medical condition associated with cancer, inflammatory diseases or disorders, metabolic disorders, obesity, diabetes, high blood pressure, vascular diseases, viral infection, and any combination thereof, in a subject in need thereof.

In a further embodiment, the pharmaceutical composition is for preventing, ameliorating or treating a medical condition associated with cancer, inflammatory diseases or disorders, metabolic disorders, obesity, diabetes, high blood pressure, vascular diseases, viral infection, and any combination thereof, in a subject in need thereof, thereby preventing, ameliorating or treating the medical condition in the subject.

In another aspect of the disclosure, there is provided a nutraceutical composition comprising the composition according to the present disclosure.

In another aspect of the disclosure, there is provided a method for obtaining a composition according to the present disclosure, the method comprising the steps of: contacting between 0.1% and 5% (w/w) of quercetin or a derivative thereof with an acetic acid solution comprising from 0.1% to 5% (w/w) of butyric acid or a derivative thereof for a period of time between 1 minute (min) and 2 hours (h), under conditions suitable for the quercetin to dissolve, thereby obtaining the composition.

In a further embodiment, the contacting comprises shaking, mixing, high shear mixing, overhead stirring, homogenizing, centrifugation, or any combination thereof.

In a further embodiment, the conditions suitable for the quercetin to dissolve comprises heating the solution to a temperature between 22 °C and 45 °C.

In another aspect of the disclosure, there is provided a package comprising the composition according to the present disclosure, or the pharmaceutical composition according to the present disclosure, preferably airtight container.

In another aspect of the disclosure, there is provided a use of the composition according to the present disclosure, as a food supplement.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

Further embodiments and the full scope of applicability of the present disclosure will become apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from this detailed description.

### BRIEF DESCRIPTION OF THE DRAWINGS

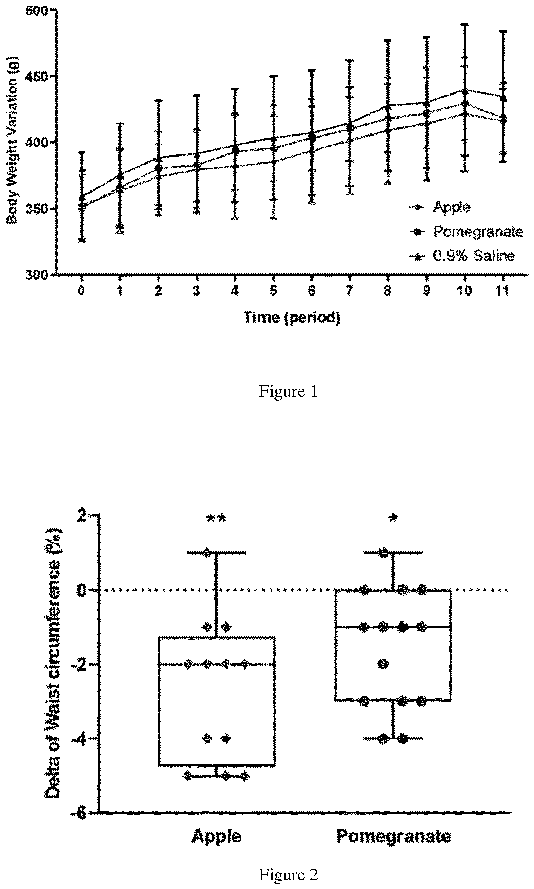

Figure 1 is a graph presenting the effect of apple or pomegranate posca supplementation. Cumulative absolute body weight per period. Data were analyzed using Ordinary two-way ANOVA, and post hoc Tukey's multiple comparisons test. Values are presented as Mean ± Standard deviation (SD). Apple posca (n=15-12); Pomegranate (n=15); 0.9%Saline(n=15);
Figure 2 is a graph presenting the effect of apple or pomegranate posca supplementation. Delta difference of relative Waist circumference. Values are presented as Median and Min to Max. Apple posca (n=15-12); Pomegranate (n=15); 0.9%Saline(n=15). Asterisk (^{∗}) denotes statistical significance (^{∗}p<0.05; ^{∗∗}p<0.005) for the comparisons;

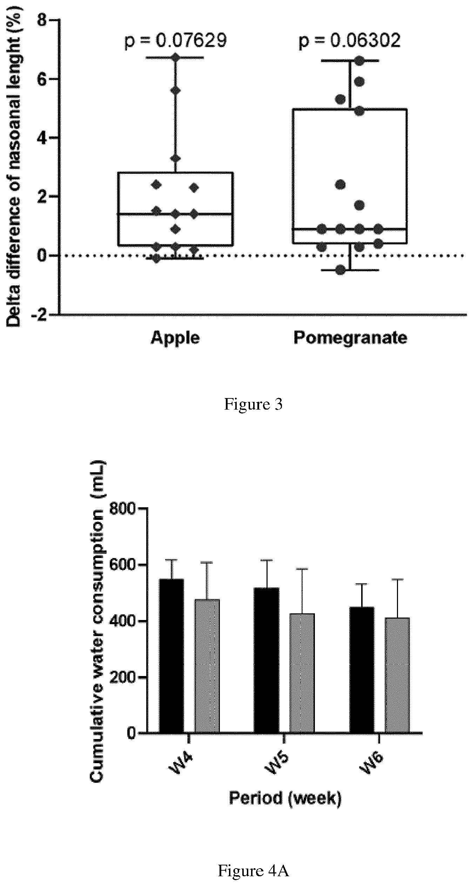

Figure 3 is a graph presenting the effect of apple or pomegranate posca supplementation. Delta difference of relative nasoanal length. Values are presented as Median and Min to Max. Apple posca (n=15-12); Pomegranate (n=15); 0.9%Saline (n=15) P. period;

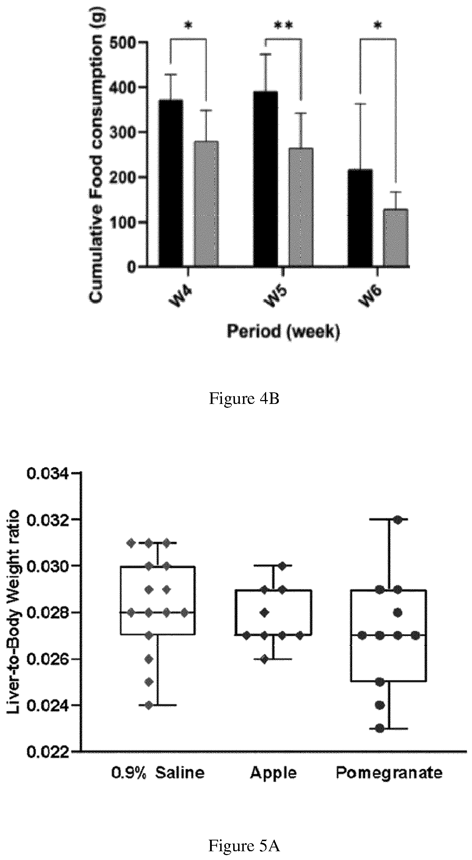

Figures 4A-B are bar graphs presenting the effect of apple or pomegranate posca supplementation: cumulative water consumption (mL) (Figure 4A) and cumulative food consumption (g) (Figure 4B). Values are presented as Mean ± Standard deviation (SD). Treated groups (black; n = 30); 0.9 % Saline Group (Gray; n = 15). Asterisk (^{∗}) denotes statistical significance (^{∗} p < 0.05; ^{∗∗} p < 0.005) for the comparisons; and

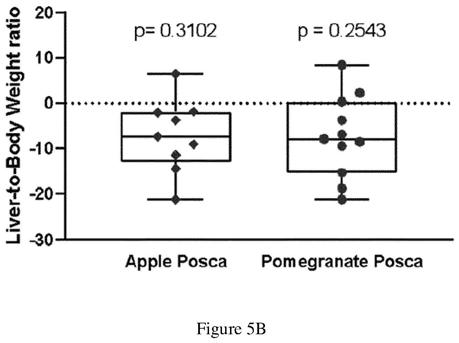

Figures 5A-B are graphs presenting the effect of apple or pomegranate posca supplementation on Liver-to-Body Weight Ratio (Figure 5A) and Mean difference of relative Liver-to-Body Weight Ratio (%) (Figure 5B). Values are presented as Median and Min to Max. Apple posca (n=15-12); Pomegranate (n=15); 0.9%Saline (n=15) P. period. Asterisk (^{∗}) denotes statistical significance (^{∗}p<0.05; ^{∗∗}p<0.005) for the comparisons.

### DETAILED DESCRIPTION OF THE INVENTION

According to some embodiments, the present disclosure provides a composition comprising acetic acid, butyric acid or a derivative thereof, and quercetin or a derivative thereof.

In some embodiments, the composition (e.g. a pharmaceutical and/or a nutraceutical composition) is or comprises vinegar. In some embodiments, the composition (e.g. the pharmaceutical and/or nutraceutical composition) is or comprises at least one active agent derived from vinegar. In some embodiments, the composition (e.g., the pharmaceutical and/or nutraceutical composition) is or comprises at least one active agent which is found in vinegar. In some embodiments, the active agent is a synthetic compound or a natural compound. In some embodiments, the active agent is an isolated compound (e.g. a purified compound) derived from vinegar. In some embodiments, the active agent comprises a compound constituting, secreted, derived, isolated, or produced by vinegar. In some embodiments, the active agent is vinegar. In some embodiments, the compound is a natural compound or a synthesized compound.

Suitable vinegar according to the present disclosure include natural vinegar, prepared from common products of agricultural origin, known in the art.

As used herein, "vinegar" refers to an aqueous solution of acetic acid and trace compounds (e.g. phenolic compounds), made by a two-step fermentation process, converting simple sugars to ethanol using yeast, and ethanol to acetic acid by acetic acid bacteria. Vinegar typically contains 5-8% acetic acid by volume. As used herein, acetic acid or ethanoic acid refers to an acidic, colorless liquid and organic compound with the chemical formula CH3COOH. Vinegar is at least 4% acetic acid by volume, making acetic acid the main component of vinegar apart from water and other trace elements.

In some embodiments according to the present disclosure, the terms "vinegar" and "acetic acid" are equivalent and used interchangeably.

As used herein, the term "isolated compound" refers to a compound that is essentially free from other contaminating components, such as impurities. Typically, an active agent and/or isolated compound is present within the composition in a highly purified form, i.e., at least about 80% pure, at least about 90% pure, at least about 95% pure, greater than 95% pure, or greater than 99% pure. In some embodiments, the active agent is or comprises a pharmaceutical-grade compound. In some embodiments, the active agent is or comprises a food-grade compound.

As used herein "butyric acid" (BA), also known under the systematic name butanoic acid, is a straight-chain alkyl carboxylic acid with the chemical formula CH₃CH₂CH₂CO₂H and refers to a short chain fatty acid (SCFA). A composition according to the present disclosure comprises butyric acid, a derivative, or a precursor thereof. In some embodiments, according to the present invention butyric acid refers to tributyrin. In some embodiments, a composition according to the present disclosure comprises tributyrin. As used herein, "tributyrin" refers to a glyceride of butyric acid containing three butyrate molecules esterified to a glycerol backbone. Tributyrin has been shown to be an effective source of butyric acid. Tributyrin is an alternative source of dietary butyrate which does not require a coating and can pass through the upper gastrointestinal tract to release butyric acid in the small intestine after cleavage by pancreatic lipase. In some embodiments according to the present disclosure, the terms "butyric acid or a derivative thereof' and "tributyrin" are equivalent and used interchangeably.

As used herein "quercetin" refers to a polyphenolic flavonoid, more specifically a pentahydroxyflavone having the five hydroxy groups placed at the 3-, 3'-, 4'-, 5- and 7-positions. Quercetin is one of the most abundant flavonoids in edible vegetables, fruit and wine.

According to some embodiments of the present disclosure, a composition as described herein is an edible composition. As used herein, the term "edible composition" refers to a composition suitable for consumption, typically via the oral cavity (although consumption may occur via non-oral means such as inhalation). Edible compositions may be present in any form including, but not limited to, liquids, solids, semi-solids, tablets, lozenges, powders, gels, gums, pastes, flurries, syrups, aerosols and sprays. As used herein, edible compositions include food products, pharmaceutical compositions, and consumer products. The term edible compositions also refers to, for example, dietary and nutritional supplements.

In some embodiments, the composition and/or food product is in the form of a gum. In some embodiments, the composition and/or food product is in the form of a semisolid. In some embodiments, the composition and/or food product is in the form of a liquid.

The present disclosure is based, in part, on the finding that a composition as described herein comprising acetic acid, butyric acid or a derivative thereof, and quercetin or a derivative thereof, being at the ratios described in the present disclosure, is suitable for consumption and masks the off-flavor derived from acetic acid. The present disclosure is based, in part, on the finding that a composition as described herein comprising acetic acid, butyric acid or a derivative thereof, and quercetin or a derivative thereof, being at the ratios described in the present disclosure, is suitable for consumption and masks the off-flavor derived from butyric acid or a derivative thereof. The present disclosure is based, in part, on the finding that a composition as described herein comprising acetic acid, butyric acid or a derivative thereof, and quercetin or a derivative thereof, being at the ratios described in the present disclosure, is suitable for consumption and masks the off-flavor derived from quercetin.

The present disclosure is based, in part, on the finding that compositions (e.g., formulations) according to the present disclosure, comprising acetic acid, butyric acid or a derivative thereof, and quercetin or a derivative thereof, being at certain predetermined ratios, exhibit a desired stability as well as improved biological activities, compared to formulations comprising only one, or two of the same materials.

The present disclosure is based, in part, on the finding that compositions (e.g., formulations) according to the present disclosure, comprising acetic acid, butyric acid or a derivative thereof, and quercetin or a derivative thereof, being at certain predetermined ratios, exhibit a desired stability as well as improved biological activities, compared to formulations comprising the same materials but having different volume or weight ratios thereof.

The present disclosure is based, in part, on the finding that compositions (e.g., formulations) according to the present disclosure, comprising acetic acid, butyric acid or a derivative thereof, and quercetin or a derivative thereof, being at certain predetermined ratios, exhibit improved anti-oxidant activity and/or anti-inflammatory activity, compared to formulations comprising only one, or two of the same materials.

The present disclosure is based, in part, on the finding that compositions (e.g., formulations) according to the present disclosure, comprising acetic acid, butyric acid or a derivative thereof, and quercetin or a derivative thereof, being at certain predetermined ratios, modulate a subject's appetite and decrease an accumulation of abdominal fat. In some embodiments, the compositions (e.g., formulations) according to the present disclosure decrease a fat mass that accumulates in a liver of a subject, when administered to the subject.

The present disclosure is based, in part, on the finding that compositions (e.g., formulations) according to the present disclosure, comprising acetic acid, butyric acid or a derivative thereof, and quercetin or a derivative thereof, being at certain predetermined ratios, exhibit improved anti-oxidant activity and/or anti-inflammatory activity, compared to formulations comprising the same materials but having different volume or weight ratios thereof.

The present disclosure is based, in part, on the finding that compositions (e.g., formulations) according to the present disclosure, comprising acetic acid, butyric acid or a derivative thereof, and quercetin or a derivative thereof, being at certain predetermined ratios, exhibit a synergistic effect.

Herein throughout, by "composition" it is further meant to refer to a formulation.

In some embodiments, the present disclosure provides non-toxic formulations. In some embodiments, the present disclosure provides food grade formulations. As used herein, the term "formulation" refers to a vehicle composition in the form of a solution, an emulsion, a lotion, a cream, a gel etc., that optionally further comprises carriers and/or excipients and optionally other chemical components. The formulation can optionally further additional active agents and/or additives.

In some embodiments, the term "by weight" means by weight of the total composition.

The term "active agent" as used herein refers to any small organic molecule, either synthesized or naturally occurring. In some embodiments, the active agent comprises butyric acid or a derivative thereof, quercetin or a derivative thereof, a compound constituting, secreted, derived, isolated, or produced by vinegar, or any combination thereof. As used herein, the term "small organic molecule" refers to a molecule of a size comparable to those organic molecules generally used in pharmaceuticals. The term excludes natural biological macromolecules (e.g., proteins, nucleic acids, etc.). In some embodiments, organic molecules have a size up to 5000 Da, up to 2000 Da, or up to 1000 Da, including any value therebetween. Each possibility represents a separate embodiment of the disclosure.

According to some embodiments, the present disclosure provides a composition comprising between 50% and 95% weight per weight (w/w) of acetic acid, between 0.1% and 5% (w/w) of butyric acid or a derivative thereof, and between 0.1% and 5% (w/w) of quercetin or a derivative thereof.

In some embodiments, the composition comprises between 50% and 95% (w/w), between 55% and 95% (w/w), between 60% and 95% (w/w), between 65% and 95% (w/w), between 70% and 95% (w/w), between 75% and 95% (w/w), between 80% and 95% (w/w), between 85% and 95% (w/w), between 50% and 90% (w/w), between 55% and 90% (w/w), between 60% and 90% (w/w), between 65% and 90% (w/w), between 70% and 90% (w/w), between 75% and 90% (w/w), between 80% and 90% (w/w), between 85% and 90% (w/w), between 50% and 85% (w/w), between 55% and 85% (w/w), between 60% and 85% (w/w), between 65% and 85% (w/w), or between 70% and 85% (w/w) of acetic acid, including any range therebetween. Each possibility represents a separate embodiment of the present disclosure.

In some embodiments, the composition comprises between 0.1% and 5% (w/w), between 0.2% and 5% (w/w), between 0.3% and 5% (w/w), between 0.4% and 5% (w/w),
between 0.1% and 2% (w/w), between 0.2% and 2% (w/w), between 0.3% and 2% (w/w), between 0.4% and 2% (w/w), between 0.1% and 1% (w/w), between 0.2% and 1% (w/w), between 0.3% and 1% (w/w), between 0.4% and 1% (w/w), between 0.1% and 0.8% (w/w), between 0.2% and 0.8% (w/w), between 0.3% and 0.8% (w/w), or between 0.4% and 0.8% (w/w) of butyric acid or a derivative thereof, including any range therebetween. Each possibility represents a separate embodiment of the present disclosure.

In some embodiments, the composition comprises between 0.1% and 5% (w/w), between 0.2% and 5% (w/w), between 0.3% and 5% (w/w), between 0.4% and 5% (w/w), between 0.1% and 2% (w/w), between 0.2% and 2% (w/w), between 0.3% and 2% (w/w), between 0.4% and 2% (w/w), between 0.1% and 1% (w/w), between 0.2% and 1% (w/w), between 0.3% and 1% (w/w), between 0.4% and 1% (w/w), between 0.1% and 0.8% (w/w), between 0.2% and 0.8% (w/w), between 0.3% and 0.8% (w/w), or between 0.4% and 0.8% (w/w) of quercetin or a derivative thereof, including any range therebetween. Each possibility represents a separate embodiment of the present disclosure.

In some embodiments, the composition comprises between 5% and 40% (w/w), between 10% and 40% (w/w), between 15% and 40% (w/w), between 20% and 40% (w/w), between 25% and 40% (w/w), between 5% and 35% (w/w), between 10% and 35% (w/w), between 15% and 35% (w/w), between 20% and 35% (w/w), or between 25% and 35% (w/w), of a fruit or vegetable material, including any range therebetween. Each possibility represents a separate embodiment of the present disclosure. In some embodiments, the material is selected from the group: an extract, a biomass, a filtrate, a concentrate, a wort, any fraction thereof, and any combination thereof.

The present disclosure is based, in part, on the finding that compositions according to the present disclosure comprising acetic acid, butyric acid or a derivative thereof, quercetin or a derivative thereof, and a fruit or vegetable material decrease the effects derived from the vinegar acidity (e.g. stomach discomfort).

The present disclosure is based, in part, on the finding that compositions according to the present disclosure comprising acetic acid, butyric acid or a derivative thereof, quercetin or a derivative thereof, and a fruit or vegetable material masks the vinegar acidic taste.

The present disclosure is based, in part, on the finding that compositions according to the present disclosure comprising acetic acid, butyric acid or a derivative thereof, quercetin or a derivative thereof, and a fruit or vegetable material smoothen the vinegar taste. According to the present disclosure, smoothen and smooth are used interchangeably to refer to a taste that is not bitter, less bitter, not acidic, less acidic, or any combination thereof and tastes pleasant.

In some embodiments, the acetic acid is vinegar, vinegar extract, vinegar mother, a derivative of vinegar, vinegar extract, vinegar mother, or any combination thereof.

In some embodiments, the acetic acid is vinegar and vinegar mother.

As used herein, "vinegar mother" refers to a biofilm composed of a form of cellulose and acetic acid bacteria that develops on fermenting alcoholic liquids, which turns alcohol into acetic acid with the help of oxygen from the air.

In some embodiments, the vinegar, vinegar extract or vinegar mother is obtained from a fruit, a vegetable, a syrup, wine, or any combination thereof. In some embodiments, the vinegar, vinegar extract or vinegar mother is obtained from grape, apple, malt, pineapple, pomegranate, or any combination thereof.

In some embodiments, a w/w ratio of the butyric acid or a derivative thereof and the quercetin or a derivative thereof is between 1.5:1 and 1:2, between 1.3:1 and 1:2, between 1.1:1 and 1:2, between 1.5:1 and 1:1.7, between 1.5:1 and 1:1.6, or between 1.5:1 and 1:1, including any range therebetween. Each possibility represents a separate embodiment of the present disclosure.

In some embodiments, the composition further comprises a flavoring agent. In some embodiments, the flavoring agent is an extract or a concentrate. Flavoring agents are well known to those skilled in the art. Suitable flavoring agents include fruit juice, herbs, spices and flowers. For example, the fruit can be a citrus fruit such as orange, lemon, lime, grapefruit, tangerine, satsuma and clementine; a tropical fruit such as pineapple, mango and passion fruit; a berry such as strawberry, raspberry, blueberry, blackberry and cranberry; a superfruit such as acai, goji, maca, mangosteen, noni and pomegranate; and other fruits such as grape, apple, pear, tomato and blackcurant. The spice may be ginger or cinnamon. The flower may be elderflower. In one embodiment, the flavoring agent comprises a fruit juice, an extract, a concentrate thereof, or any combination thereof. The fruit juice, or extract or concentrate thereof, may be selected from orange, lemon, lime, apple, and/or blackcurrant. In other embodiments, the composition comprises a plurality of flavoring agents. In some embodiments, the flavoring agent is a naturally occurring flavoring agent which is suitable for human consumption.

In some embodiments, the composition is in the form of a powder, capsule, a tablet, a lotion, a gel, a gummy-like composition, a liquid solution, or a liquid suspension.

In some embodiments, the composition is an edible composition. In some embodiments, the composition is a pharmaceutical composition or a nutraceutical composition.

In some embodiments, the composition is a probiotic composition, prebiotic composition, or both.

In some embodiments, the composition is a dietary supplement or a nutritional supplement.

In some embodiments, the composition is a vegan composition.

According to some embodiments, the present disclosure provides a use of the composition described hereinabove, as a food supplement.

According to some embodiments, the present disclosure provides a food product comprising a composition as described hereinabove.

As used herein, the term "food product" refers to a material, a substance, or an additive, which can be used as food, or which can be added to food. Typically, the food product is any composition that an animal, preferably a mammal such as a human, may consume as part of its diet. In some embodiments, the term "food product" as used herein, refers to a food supplement, dietary supplement and nutritional supplement.

According to the present disclosure, a dietary supplement as disclosed herein is suitable for oral consumption and is administered orally. In some embodiments, the dietary supplement is in the form of capsules (e.g., those meant to be swallowed or chewed), tablets (e.g., those meant to be swallowed or chewed), powders (e.g., the powder can be added to water, milk, or another liquid), liquids (e.g., either in ready to drink form or suitable for dilution in another beverage), or nutritional foodstuffs. For example, the dietary supplement can be in the form of nutritional bars (e.g., meal or snack bars), cookies, candies (e.g., taffies, caramels, jellies, chocolate melt-aways, chews such as fruit chews, gums), syrups, or beverages (e.g., ready to drink or in the form of concentrates or powders).

According to the present disclosure, a nutritional supplement as disclosed herein is suitable for oral consumption and is administered orally. In some embodiments, the nutritional supplement is in the form of capsules (e.g., those meant to be swallowed or chewed), tablets (e.g., those meant to be swallowed or chewed), powders (e.g., the powder can be added to water, milk, or another liquid), liquids (e.g., either in ready to drink form or suitable for dilution in another beverage), or nutritional foodstuffs. For example, the nutritional supplement can be in the form of nutritional bars (e.g., meal or snack bars), cookies, candies (e.g., taffies, caramels, jellies, chocolate melt-aways, chews such as fruit chews, gums), syrups, or beverages (e.g., ready to drink or in the form of concentrates or powders).

In some embodiments, a dietary supplement a disclosed hereinabove, is for use in the prevention or treatment of a medical condition associated with cancer, inflammatory diseases or disorders, metabolic disorders, obesity, diabetes, high blood pressure, vascular diseases, viral infection, and any combination thereof, in a subject in need thereof.

In some embodiments, a dietary supplement a disclosed hereinabove, is for preventing, ameliorating or treating a medical condition associated with cancer, inflammatory diseases or disorders, metabolic disorders, obesity, diabetes, high blood pressure, vascular diseases, viral infection, and any combination thereof, in a subject in need thereof, thereby preventing, ameliorating or treating the medical condition in the subject.

In some embodiments, the dietary supplement is or comprises posca. In some embodiments, the dietary supplement is or comprises vinegar, butyric acid or a derivative thereof, and quercetin or a derivative thereof. In some embodiments, the dietary supplement is a vegan dietary supplement.

In some embodiments, the dietary supplement is for modulating a subject's appetite and decrease an accumulation of abdominal fat. In some embodiments, the dietary supplement is for decreasing a fat mass that accumulates in a liver.

In some embodiments, the food product is or comprises vinegar. In some embodiments, the food product is or comprises posca. In some embodiments, the food product is or comprises vinegar, butyric acid or a derivative thereof, and quercetin or a derivative thereof. In some embodiments, the food product is a vegan food product.

As used herein, the term "posca" refers to a composition comprising wine vinegar and water. According to the present invention, the term posca is used to describe the composition comprising acetic acid, butyric acid or a derivative thereof, and quercetin or a derivative thereof, at the rations disclosed herein.

As used herein, the term "vegan" refers to properties of the components, and indicates that the components are not sourced from or derived from an animal or animal product. As such, the components that are "vegan" are free of any animal products or animal byproducts. What constitutes an animal product or byproduct is well known in this field, and to those following a vegetarian or vegan diet. In particular, the term "animal product" refers to any animal parts, animal byproducts, or products produced by an animal. Some examples of materials that would be considered "animal products" include those parts of the animal that are consumable or typically prepared for consumption by humans (including, e.g., fat, flesh, blood, etc.). Products produced by an animal are also considered "animal products" as used herein, and refer to the products produced by an animal without slaughtering the animal, (e.g., milk, eggs, honey, etc.). "Animal byproducts" are products that are typically not consumable by themselves but are the byproducts of slaughtering animals for consumption, e.g., bones, carcasses, etc. However, animal byproducts are often processed into human consumable foodstuffs, some well-known examples of which include gelatin, casein, whey, rennet, etc. As used herein, these processed animal byproducts (e.g., gelatin, casein, whey, rennet, etc.) are encompassed by the term "animal byproducts." As described herein, "vegan" and "plant-based" components or ingredients are substantially free (or in some embodiments, completely free) of such animal products and byproducts.

In some embodiments, compositions and food products as described herein are suitable for a vegan diet and/or a vegetarian diet. For example, in embodiments in which the composition is suitable for a vegan diet, the composition may include primarily plant-based components such that the composition contains substantially no animal products, animal byproducts, or substantially no components derived from these animal sources.

In some embodiments, a food product or composition as described herein, comprises one or more flavoring agents. In some embodiments, a food product or composition as described herein, comprises yeast, sugar, salt, and any combination thereof. Various natural or artificial flavoring agents are known to those skilled in the art, and can include, for example, salt, spices, sugar, sweeteners, monosodium glutamate, sulfuric flavoring agents such as black salt, or other flavoring agents.

In some embodiments, a food product or composition as described herein, comprises one or more coloring agents. Various natural or artificial coloring agents are known to those skilled in the art, and can include, for example, carotenoids such as beta-carotene, turmeric, annatto, mango yellow, or palm-based oils.

In some embodiments, a food product or composition as described herein, further comprises an emulsifier, a thickener, an oil, or any combination thereof.

In some embodiments, the oil is a vegetable-based oil. Examples of vegetable oils that may be used according to the present disclosure include, but are not limited to, soybean oil, safflower oil, linseed oil, corn oil, sunflower oil, olive oil, canola oil, sesame oil, cottonseed oil, palm oil, rapeseed oil, tung oil, or a blend of any of these oils. Alternatively, any partially hydrogenated vegetable oils or genetically modified vegetable oils can be used. Examples of partially hydrogenated vegetable oils or genetically modified vegetable oils include, but are not limited to, high oleic safflower oil, high oleic soybean oil, high oleic peanut oil, high oleic sunflower oil and high erucic rapeseed oil (crambe oil).

According to some embodiments, the present disclosure provides a pharmaceutical composition comprising the composition described hereinabove, and optionally a pharmaceutically acceptable carrier.

In some embodiments, the pharmaceutical composition of the disclosure comprises a therapeutically effective amount of the composition of the disclosure and/or any pharmaceutically acceptable salt and/or derivative thereof. In some embodiments, therapeutically effective amount is sufficient for reduction of at least one symptom, or for substantial reduction in the severity and/or inhibition of the progression of a disease, disorder, or condition as described herein. In some embodiments, the therapeutically effective amount can be determined as described herein.

In another aspect of the disclosure disclosed herein, there is a pharmaceutical composition comprising a therapeutically effective amount of an active agent as described hereinabove and optionally a pharmaceutically acceptable carrier.

In some embodiments, the pharmaceutical composition is in the form of a powder, capsule, a tablet, a lotion, a gel, a liquid solution, or a liquid suspension.

In some embodiments, the pharmaceutical composition is for use in the prevention or treatment of a medical condition associated with cancer, inflammatory diseases or disorders, metabolic disorders, obesity, diabetes, high blood pressure, vascular diseases, viral infection, and any combination thereof, in a subject in need thereof.

In some embodiments, the prevention or treatment of a medical condition associated with inflammatory diseases or disorders comprises reducing or inhibiting the expression of NO, PGE, TNF-α, IL-6, IL-10, IL1, PGE2, or any combination thereof in the subject.

In some embodiments, the pharmaceutical composition is for prevention or treatment of an inflammatory-related disease or disorder in a subject in need thereof. In some embodiments, prevention or treatment comprises inhibiting any one of: production, expression, secretion, or any combination thereof, of interleukin (IL-6, IL-10, IL1, or any combination thereof) in the subject. In some embodiments, prevention or treatment comprises inhibiting any one of production, expression and secretion of IL-6, IL-10, IL1, or any combination thereof, in a myeloid cell, a monocyte, a macrophage, or any combination thereof. In some embodiments, an inflammatory -related disease comprises an inflammatory-based disease. As used herein, the phrase "inflammatory-related/associated disease" comprises any disease or disorder involving, promoted by, induced by, resulting with, inflammation. In some embodiments, an inflammatory-related disease is characterized by or comprises IL-6, IL-10, IL1, or any combination thereof, increased production, expression, secretion, or any combination thereof, in a subject, such from cells as disclosed herein.

In some embodiments, the pharmaceutical composition is for use in the activating of the innate immune response in a subject in need thereof. In some embodiments, the pharmaceutical composition is for use in the prevention or treatment of an inflammatory disease or disorder in a subject in need thereof. In some embodiments, prevention or treatment comprises inhibiting any one of production, expression and secretion of TNF-α in the subject. In some embodiments, prevention or treatment comprises inhibiting any one of production, expression and secretion of TNF-α in a myeloid cell such as, but not limited to a monocyte, or a macrophage.

As used herein, the term "monocyte" refers to immune cells circulating in the blood and infiltrating to the damaged or infected organ participating in the inflammatory process. Monocyte as macrophages are the immune system first line of defense and are key players participating in inflammation as part of the innate immune system. Inflammatory monocytes selectively traffic to the sites of inflammation, produce inflammatory cytokines and contribute to local and systemic inflammation. They are highly infiltrative and can be differentiated into inflammatory macrophages. One key difference between monocyte and macrophage is that monocyte is the precursor of some of the macrophages whereas macrophages are the professional phagocytes, which engulf pathogens invading the body. Monocytes are bean-shaped small cells whereas macrophages are irregular-shaped large cells.

In some embodiments, the pharmaceutical composition is for use in reducing the level of: cytokine production, cytokine secretion, or both, in the subject. Methods for determining cytokine production levels, secretion levels, or both are common and would be apparent to one of ordinary skill in the art. Non-limiting examples for such determination methods include, but are not limited to, immunoassays, such as enzyme-linked immunosorbent assay (ELISA), western blot, dot-blot, MS-MS, or any combination thereof.

In some embodiments, the pharmaceutical composition is for use in the reduction of fat mass in tissues, improvement of body composition, reduction of fat infiltrated into muscle fibers, reduction of fat (steatosis) in the liver, increase in contractile proteins in the muscle, or any combination thereof.

In some embodiments, the pharmaceutical composition is for modulating a subject's appetite and decrease an accumulation of abdominal fat. In some embodiments, the dietary supplement is for decreasing a fat mass that accumulates in a liver.

In some embodiments, the pharmaceutical composition is for use in reducing the risk of diabetes, hypertension, vascular diseases, inflammation, chronic diseases, or any combination thereof.

In some embodiments, the pharmaceutical composition is for use in reducing insulin released (improvement of the glycemic index - reduced risk of diabetes), reduction of an amount of sugars in the blood (reducing the risk of metabolic syndrome), appetite regulation, immune system activity regulation, reduction of inflammation, or any combination thereof.

Non-limiting examples of pharmaceutically acceptable salts include but are not limited to: acetate, aspartate, benzenesulfonate, benzoate, bicarbonate, carbonate, halide (such as bromide, chloride, iodide, fluoride), bitartrate, citrate, salicylate, stearate, succinate, sulfate, tartrate, decanoate, edetate, fumarate, gluconate, and lactate or any combination thereof.

In some embodiments, the pharmaceutical composition comprises the active agent of the disclosure and a pharmaceutically acceptable carrier. In some embodiments, the pharmaceutical composition comprises a therapeutically effective amount of the active agent of the disclosure and the pharmaceutically acceptable carrier.

In some embodiments, the pharmaceutical composition is in a form of a combination or of a kit of parts. In some embodiments, the pharmaceutical composition of the disclosure is for use as a medicament.

For example, the term "pharmaceutically acceptable" can mean approved by a regulatory agency of the Federal or a state government or listed in the U.S. Pharmacopeia or other generally recognized pharmacopeia for use in animals, and more particularly in humans. In some embodiments, the compound of the disclosure is referred to herein as an active ingredient of a pharmaceutical composition.

In some embodiments, the pharmaceutical composition as described herein is a topical composition. In some embodiments, the pharmaceutical composition is an oral composition. In some embodiments, the pharmaceutical composition is an injectable composition. In some embodiments, the pharmaceutical composition is for a systemic use.

As used herein, the term "carrier" refers to a diluent, adjuvant, excipient, or vehicle with which the active ingredient is administered. Such carriers can be sterile liquids, such as water-based and oils, including those of petroleum, animal, vegetable or synthetic origin, such as peanut oil, soybean oil, mineral oil, sesame oil and the like, polyethylene glycols, glycerin, propylene glycol or other synthetic solvents.

Other non-limiting examples of carriers include, but are not limited to: terpenes derived from Cannabis, or total terpene extract from Cannabis plants, terpenes from coffee or cocoa, mint-extract, eucalyptus-extract, citrus-extract, tobacco-extract, anis-extract, any vegetable oil, peppermint oil, d-limonene, b-myrcene, a-pinene, linalool, anethole, a-bisabolol, camphor, b-caryophyllene and caryophyllene oxide, 1,8-cineole, citral, citronella, delta-3-carene, farnesol, geraniol, indomethacin, isopulegol, linalool, unalyl acetate, b-myrcene, myrcenol, 1-menthol, menthone, menthol and neomenthol, oridonin, a-pinene, diclofenac, nepafenac, bromfenac, phytol, terpineol, terpinen-4-ol, thymol, and thymoquinone. One skilled in the art will appreciate, that a particular carrier used within the pharmaceutical composition of the disclosure may vary depending on the route of administration.

In some embodiments, the carrier improves the stability of the active ingredient in a living organism. In some embodiments, the carrier improves the stability of the active ingredient within the pharmaceutical composition. In some embodiments, the carrier enhances the bioavailability of the active ingredient.

Water may be used as a carrier such as when the active ingredient has a sufficient aqueous solubility, so as to be administered intravenously. Saline solutions and aqueous dextrose and glycerol solutions can also be employed as liquid carriers, particularly for injectable solutions.

In some embodiments, the carrier is a liquid carrier. In some embodiments, the carrier is an aqueous carrier.

Suitable pharmaceutical excipients include starch, glucose, lactose, sucrose, gelatin, malt, rice, flour, chalk, silica gel, sodium stearate, glycerol monostearate, talc, sodium chloride, dried skim milk, glycerol, propylene glycol, water, ethanol and the like. The composition, if desired, can also contain minor amounts of wetting or emulsifying agents, or pH buffering agents such as acetates, citrates or phosphates. Antibacterial agents such as benzyl alcohol or methyl parabens; antioxidants such as ascorbic acid or sodium bisulfite; and agents for the adjustment of tonicity such as sodium chloride or dextrose are also envisioned. The carrier may comprise, in total, from 0.1% to 99.99999% by weight of the composition/s or the pharmaceutical composition/s presented herein.

In some embodiments, the pharmaceutical composition includes incorporation of any one of the active ingredients into or onto particulate preparations of polymeric compounds such as polylactic acid, polyglycolic acid, hydrogels, etc., or onto liposomes, microemulsions, micelles, unilamellar or multilamellar vesicles, erythrocyte ghosts, or spheroplasts. Such compositions may influence the physical state, solubility, stability, rate of in vivo release, and rate of in vivo clearance.

In some embodiments, the pharmaceutical composition comprising the active agent of the disclosure is in a unit dosage form. In some embodiments, the pharmaceutical composition is prepared by any of the methods well known in the art of pharmacy. In some embodiments, the unit dosage form is in the form of a tablet, capsule, lozenge, wafer, patch, ampoule, vial or pre-filled syringe.

In addition, in vitro assays may optionally be employed to help identify optimal dosage ranges. The precise dose to be employed in the formulation will also depend on the route of administration, and the nature of the disease or disorder, and should be decided according to the judgment of the practitioner and each patient's circumstances. Effective doses can be extrapolated from dose-response curves derived from in-vitro or in-vivo animal model test bioassays or systems. In some embodiments, the effective dose is determined as described hereinabove.

In another embodiment, the pharmaceutical composition of the disclosure is administered in any conventional oral, parenteral or transdermal dosage form.

As used herein, the terms "administering", "administration", and like terms refer to any method which, in sound medical practice, delivers a composition containing an active agent to a subject in such a manner as to provide a therapeutic effect. In some embodiments, administering is by an oral administration, a systemic administration or a combination thereof.

In some embodiments, for oral applications, the pharmaceutical composition or is in the form of a tablets or a capsule, which can contain any of the following ingredients, or compounds of a similar nature: a binder such as microcrystalline cellulose, gum tragacanth or gelatin; an excipient such as starch or lactose; a disintegrating agent such as alginic acid, Primogel, or corn starch; a lubricant such as magnesium stearate; or a glidant such as colloidal silicon dioxide. When the dosage unit form is a capsule, it can contain, in addition to materials of the above type, a liquid carrier such as fatty oil. In addition, dosage unit forms can contain various other materials which modify the physical form of the dosage unit, for example, coatings of sugar, shellac, or other enteric agents. In some embodiments, the tablet of the disclosure is further film coated. In some embodiments, oral application of the pharmaceutical composition or of the kit is in a form of a drinkable liquid. In some embodiments, oral application of the pharmaceutical composition or of the kit is in a form of an edible product.

In another aspect of the present disclosure, there is a method for preventing, ameliorating or treating a medical condition associated with cancer, inflammatory diseases or disorders, metabolic disorders, obesity, diabetes, high blood pressure, vascular diseases, viral infection, and any combination thereof, in a subject in need thereof, the method comprises administering to the subject a therapeutically effective amount of the pharmaceutical composition described hereinabove, thereby preventing, ameliorating or treating the medical condition in the subject.

In another aspect of the disclosure disclosed herein, there is a method for preventing, ameliorating or treating an inflammatory disease or disorder in a subject in need thereof. In some embodiments, the method comprises administering to the subject a therapeutically effective amount of the pharmaceutical composition described hereinabove, thereby preventing, ameliorating or treating an inflammatory disease or disorder in the subject.

In another aspect of the disclosure disclosed herein, there is a method for preventing, ameliorating or treating a subject afflicted with a cytokine release syndrome comprising administering to the subject a therapeutically effective amount of the pharmaceutical composition described hereinabove, thereby preventing, ameliorating or treating the subject afflicted with a cytokine release syndrome.

In some embodiments, a cytokine release syndrome comprises an infectious disease. In some embodiments, an infectious disease comprises a viral disease. In some embodiments, a cytokine release syndrome comprises a viral-induced cytokine release syndrome.

In another aspect of the disclosure disclosed herein, there is a method of modulating an immune response in a subject in need thereof, comprising administering to the subject a therapeutically effective amount of the pharmaceutical composition described hereinabove, thereby modulating an immune response in the subject.

In some embodiments, modulating, preventing or treating comprises reducing the level of: cytokine concentration within a cell, cytokine production, cytokine secretion, or both, in the subject. In some embodiments, the pharmaceutical composition is selective to at least one cytokine.

In some embodiments, a cytokine is selected from: interleukin 6 (IL-6), interferon gamma (IFN-γ), tumor necrosis factor alpha (TNFα), IL-8, IL-10, IL-1β, IL-17, C-C Motif Chemokine Ligand 2 (CCL-2), granulocyte-macrophage colony-stimulating factor (GM-CSF), macrophage inflammatory protein-1 alpha and/or betta (MIP-1α/β), monocyte chemoattractant protein-1 (MCP-1), chemokine (C-X-C motif) ligand 9 (CXCL9), CXCL10 (also known as Interferon gamma-induced protein 10 (IP-10) or small-inducible cytokine B10), or any combination thereof. In some embodiments, a cytokine is TNFα. In some embodiments, a cytokine comprises a plurality of cytokines comprising IL-6, and TNFα.

In some embodiments, the administering comprises systemically administering, orally administering, topically administering, or any combination thereof.

According to some embodiments, the present disclosure provides a method for obtaining a composition as described hereinabove, the method comprising the steps of: contacting between 0.1% and 5% (w/w) of quercetin or a derivative thereof with an acetic acid solution comprising from 0.1% to 5% (w/w) of butyric acid or a derivative thereof for a period of time, under conditions suitable for the quercetin to dissolve, thereby obtaining the composition.

In some embodiments, the contacting comprises shaking, mixing, high shear mixing, overhead stirring, homogenizing, centrifugation, or any combination thereof.

In some embodiments, the period of time is between 1 minute (min) and 2 hours (h), between 5 min and 2 h, between 10 min and 2 h, between 30 min and 2 h, between 40 min and 2 h, between 1h and 2 h, between 1 min and 1 h, between 5 min and 1 h, between 10 min and 1 h, between 30 min and 1 h, or between 40 min and 1 h, including any range therebetween. Each possibility represents a separate embodiment of the present disclosure.

In some embodiments, the conditions suitable for the quercetin to dissolve comprises heating the solution to a temperature between 22 °C and 45 °C.

In some embodiments, the method further comprises a step of evaporating the solution.

In some embodiments, the method is performed in a closed container and isolated from light exposure.

According to some embodiments, the present disclosure provides a package comprising the composition described hereinabove, or the pharmaceutical composition described hereinabove. In some embodiments, the package is an airtight container.

In some embodiments, the package is a blow-fill airtight container. In some embodiments, the package comprises a twist opening, a puncture opening, or twist and puncture opening.

According to some embodiments, the present disclosure provides a kit comprising the composition described hereinabove, or the pharmaceutical composition described hereinabove, wherein the composition or the pharmaceutical composition is stored in a single use airtight container.

In some embodiments, the content of the kit is packaged, as described below, to allow for storage of the components until they are needed.

In some embodiments, some or all components of the kit may be packaged in suitable packaging to maintain sterility.

In some embodiments, the composition or the pharmaceutical composition are stored in separate containers within the main kit containment element e.g., box or analogous structure, may or may not be an airtight container, e.g., to further preserve the sterility of some or all of the components of the kit.

In some embodiments, the dosage amount of the composition or the pharmaceutical composition provided in a kit may be sufficient for a single application or for multiple applications.

In those embodiments, the kit may have multiple dosage amounts of the composition or the pharmaceutical composition packaged in a single container, e.g., a single tube, bottle, vial, airtight container, Eppendorf and the like.

In some embodiments, the kit may have multiple dosage amounts of the composition or the pharmaceutical composition individually packaged such that certain kits may have more than one container of the composition or the pharmaceutical composition.

In some embodiments, multiple dosage amounts of the composition or the pharmaceutical composition may be packed in single separate containers.

As used herein the term "about" refers to ± 10 %.

The terms "comprises", "comprising", "includes", "including", "having" and their conjugates mean "including but not limited to".

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the disclosure may include a plurality of "optional" features unless such features conflict.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" refers to manners, means, techniques and procedures for accomplishing a given task including, but not limited to, those manners, means, techniques and procedures either known to, or readily developed from known manners, means, techniques and procedures by practitioners of the chemical, pharmacological, biological, biochemical and medical arts.

As used herein, the term "treating" includes abrogating, substantially inhibiting, slowing or reversing the progression of a condition, substantially ameliorating clinical or aesthetical symptoms of a condition or substantially preventing or reducing the susceptibility of the appearance of clinical or aesthetical symptoms of a condition.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure. Certain features described in the context of various embodiments are not to be considered essential features of those embodiments, unless the embodiment is inoperative without those elements.

Various embodiments and aspects of the present disclosure as delineated hereinabove and as claimed in the claims section below find experimental support in the following examples.

### EXAMPLES

Reference is now made to the following examples, which together with the above descriptions illustrate some embodiments of the disclosure in a non-limiting fashion.

### EXAMPLE 1

### SPECIFICATIONS OF COMPOSITIONS

The content and characteristics of exemplary compositions were studied.

A composition 1, comprising organic cider vinegar, organic concentrated apple, organic concentrated pomegranate, quercetin, tributyrin and natural flavors was studied (the referred composition 1 is also called herein as "Pomegranate Posca"), (Table 1 and Table 2).

**Table 1. Physic-chemical characteristics of composition 1.**

| **Parameter** | **Value** | **Methods** |
|---|---|---|
| Total Acidity, exp acetic acid (g/100 ml) | 4.4±0.2 | Acid/base titration - NP 3264:1989 |
| Ph | 3-3.5 | |
| Residual Alcohol (%V/V) | <0,5 | Densimetry distillate |
| Density 20°C (g/L) | 1123±10 | Densimetry |
| °Brix | 28±2 | Potentiometer |

**Table 2. Nutritional characteristics of composition 2.**

| **Parameter** | **Value** | **Methods** |
|---|---|---|
| Energy (KJ/100ml) | 427±15 | External |
| Energy (Kcal/100ml) | 100±10 | External |
| Lipids(g/100ml) of which Saturated (g/100ml) | 0±0.5 | External |
| | 0±0.5 | |
| Carbohydrates(g/100ml) of which sugar(g/100ml) | 22±5 | External |
| | 19±5 | |
| Protein(g/100ml) | 0±0.5 | External |
| Salt(g/100ml) | 0.019±0.5 | External |

A composition 2, comprising organic cider vinegar, organic concentrated apple, quercetin, tributyrin and natural flavors was studied (the referred composition 2 is also called herein as "Apple Posca") (Table 3 and Table 4).

**Table 3. Physic-chemical characteristics of composition 2.**

| **Parameter** | **Value** | **Methods** |
|---|---|---|
| Total Acidity, exp acetic acid (g/100 ml) | 4±0.2 | Acid/base titration - NP 3264:1989 |
| Ph | 3-3.5 | |
| Sulphur Dioxid (mg/L) | <10 | Iodometric titration - NP 3380:1989 |
| Density 20°C (g/L) | 1113±10 | Densimetry |
| °Brix | 26±2 | Potentiometer |

**Table 4. Nutritional characteristics of composition 2.**

| **Parameter** | **Value** | **Methods** |
|---|---|---|
| Energy (KJ/100ml) | 394±15 | External |
| Energy (Kcal/100ml) | 93±10 | External |
| Lipids (g/100ml) of which Satured (g/100ml) | 0±0.5 | External |
| | 0±0.5 | |
| Carbohydrates(g/100ml) of which sugar(g/100ml) | 20±5 | External |
| | 19±5 | |
| Protein (g/100ml) | 0±0.5 | External |
| Salt (g/100ml) | 0.014±0.5 | External |

### EXAMPLE 2

### STUDY OF METABOLIC AND ANTI-INLAMMATORY EFFECTS OF FORMULATIONS BASED ON APPLE AND POMEGRANATE POSCA

In the presented study, male Wistar rats were divided in 3 study groups, and to each was administrated either 0.9% Saline Solution, apple posca or pomegranate posca. Administrated Dose: 1ml/day; Administration: Gavage; Supplementation Period: 6 weeks

Different parameters were evaluated, such as effects on organs and mass (murinometry and tissue weight), metabolic effects (hormones -insulin, leptin, adiponectin, corticosterone, glucose, lactate, plasma lipids-triacylglycerol, cholesterol, HOMA index), inflammatory markers (TNF-α, IL10, IL6, IL1B, PGE2) and toxicological analysis (histology and marker enzymes).

Figure 1 presents the effect of apple or pomegranate posca supplementation. It can be observed that the control group and Posca-supplemented groups gained normal body weight, with a normal trend. The groups gained weight as expected (physiological), with no clear differences between the groups (no statistical difference). This benefit is even greater, the more hypercaloric the food administered.

Figure 2 presents the effect of apple or pomegranate posca supplementation, on waist circumference. According to Figure 2, the variation in abdominal circumference in animals supplemented with Posca is smaller than in animals in the control group.

Figure 3 presents the effect of apple or pomegranate posca supplementation on relative nasoanal length. According to Figure 3, the variation in nasoanal length in animals supplemented with posca is greater than in animals in the control group.

Figures 4A-B present the effect of apple or pomegranate posca supplementation, in cumulative water consumption (Figure 4A) and cumulative food consumption (Figure 4B). According to Figures 4A-B, the animals supplemented with Posca consumed less food than the animals in the control group. This result, combined with greater growth in length but less weight gain and smaller abdominal circumference, shows that Posca effectively controls appetite and does not allow for the creation of so much fat mass.

Without being bound to any particular theory, it can be assumed that posca can modulate appetite and decrease the accumulation of abdominal fat.

Figures 5A-B present the effect of apple or pomegranate posca supplementation on Liver-to-Body Weight Ratio (Figure 5A) and Mean difference of relative Liver-to-Body Weight Ratio (%) (Figure 5B). According to Figures 5A-B, the Posca-supplemented groups not only have a normal liver weight, but the supplementation with posca helped to decrease the fat mass that accumulates in the liver, a clear benefit for liver function and health in general. The liver weight in relation to the body weight was the same between the groups ("normal"), not suggesting liver damage in the Posca groups (which means, not causing liver problems).

Although the disclosure has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present disclosure. To the extent that section headings are used, they should not be construed as necessarily limiting.

## Claims

1. Composition comprising between 50% and 95% (w/w) of acetic acid, between 0.1% and 5% (w/w) of butyric acid or a derivative thereof, and between 0.1% and 5% (w/w) of quercetin or a derivative thereof.

2. Composition according to claim 1, further comprising between 5% and 40% (w/w) of a fruit or vegetable material, wherein said material is selected from the group: an extract, a biomass, a filtrate, a concentrate, a wort, any fraction thereof, and any combination thereof.

3. Composition according to claim 1 or 2, wherein said acetic acid is vinegar, vinegar extract, vinegar mother, a derivative of vinegar, vinegar extract, vinegar mother, or any combination thereof.

4. Composition according to any one of claims 1 to 3, wherein said butyric acid or a derivative thereof is tributyrin.

5. Composition according to any one of claims 1 to 4, wherein a w/w ratio of said butyric acid or a derivative thereof and said quercetin or a derivative thereof is between 1.5:1 and 1:2.

6. Food product comprising the composition according to any one of claims 1 to 5.

7. Pharmaceutical composition comprising the composition according to any one of claims 1 to 5, and optionally a pharmaceutically acceptable carrier.

8. Pharmaceutical composition according to claim 7, for use in the prevention or treatment of a medical condition associated with cancer, inflammatory diseases or disorders, metabolic disorders, obesity, diabetes, high blood pressure, vascular diseases, viral infection, and any combination thereof, in a subject in need thereof.

9. Pharmaceutical composition according to claim 7 or 8, for preventing, ameliorating or treating a medical condition associated with cancer, inflammatory diseases or disorders, metabolic disorders, obesity, diabetes, high blood pressure, vascular diseases, viral infection, and any combination thereof, in a subject in need thereof, thereby preventing, ameliorating or treating the medical condition in the subject.

10. Nutraceutical composition comprising the composition according to any one of claims 1 to 5.

11. Method for obtaining a composition according to any one of claims 1 to 5, the method comprising the steps of: contacting between 0.1% and 5% (w/w) of quercetin or a derivative thereof with an acetic acid solution comprising from 0.1% to 5% (w/w) of butyric acid or a derivative thereof for a period of time between 1 minute (min) and 2 hours (h), under conditions suitable for said quercetin to dissolve, thereby obtaining said composition.

12. Method according to claim 11, wherein said contacting comprises shaking, mixing, high shear mixing, overhead stirring, homogenizing, centrifugation, or any combination thereof.

13. Method according to claim 11 or 12, wherein said conditions suitable for said quercetin to dissolve comprises heating said solution to a temperature between 22 °C and 45 °C.

14. Package comprising the composition according to any one of claims 1 to 5, or the pharmaceutical composition according to claim 7 to 9, preferably airtight container.

15. Use of the composition according to any one of claims 1 to 5, as food supplement.
